# EUROPEAN PATENT APPLICATION

(11) **EP 0 756 897 A1**
(43) Date of publication of application: **05.02.1997**
(21) Application number: 95830355.4
(22) Date of filing: 03.08.1995
(51) Int. Cl.: B04B 9/12, F16N 7/36, F16C 33/66

(54) **Oil mist lubrication device for the bearings of rotating shafts**

(71) Applicant: VERONESI SEPARATORI S.p.A., 40050 Villanova di Castenaso (Bologna) (IT)
(72) Inventor: Pinato, Roberto, I-40012 Calderara Di Reno (Bologna) (IT)
(74) Representative: Lanzoni, Luciano

(57) **Abstract**

Intended for an upright shaft (3) carried in upper and lower bearings (4, 5) separated by a vertical gap, the oil mist lubrication device comprises a casing (6) positioned around and supporting the shaft (3), a bowl (8) containing an oil bath (9) kept at a level beneath the lower bearing (5), and, likewise internally of the casing (6), a rotor (11) mounted between the bearings (4, 5) and driven in rotation by the shaft (3), which affords oil inlet ports (12) and mist feed ports (13) interconnecting the top and bottom faces (14, 15) of a disc-like body; the device (1) additionally comprises a fixed sleeve (17) breasted with the rotor (11) at the top end and immersed in the oil bath (9) at bottom, and affording a suction duct (18) through which oil is drawn up to the inlet ports (12): oil flung from the rotor atomizes in the casing (6) to form a mist which then precipitates toward the rotor (11) and is directed through the feed ports (13) down onto the lower bearing (5) of the shaft (3).

## Description

The invention relates to an oil mist lubrication device for the bearings of rotating shafts mounted in an upright position, with the bearings aligned vertically and spaced apart one from another.

The present invention relates in particular to the drive shafts of centrifugal separators, and indeed reference is made in the following specification to such machines by way of example, albeit implying no limitation in general scope given that the device is similarly applicable to any item of equipment, whatever its use, fitted with a vertically disposed drive shaft turning in relative bearings.

In a centrifugal separator, the drive shaft of the rotating component is mounted upright internally of a casing by which the bearings are supported.

The shaft is thus surrounded by the casing, and the bottom of the casing incorporates an open topped bowl containing a bath of lubricating oil, which is in communication with the enclosure occupied by the shaft. Oil is drawn from the bowl and supplied to the bearings through the agency of a rotor set in motion by the shaft itself.

As to the general problem of how bearings are best lubricated, the method by which the rotor operates may differ in dissimilar constructional solutions but will respond substantially to either one of two typical models, depending strictly on the design of the means by which the shaft is driven in rotation.

In a first design, rotation is transmitted to the drive shaft by a train of gears enclosed within the casing. Consequently, the rotor can be provided by at least one wheel of the gear transmission which will run immersed in the oil bath, disposed in such a way as to lubricate the shaft bearings above by a direct splashing action.

In a second type of arrangement, by contrast, the shaft is set in rotation by a belt drive. In this instance the rotation of the shaft itself provides the power required to drive a lubrication pump by which oil is picked up from the bowl and directed at the bearings.

The solutions in question are also conditioned by a more specific problem, which is that the bearings need to receive oil for their lubrication both at a steady rate and in a measured quantity.

Too great a quantity of oil will in fact give rise to excessive friction and thus cause the bearing to overheat.

In the case of splash lubrication, the quantity of oil directed at the bearings will invariably exceed the quantity effectively required, and accordingly, part of the flow of lubricant is deflected in order to reduce the amount that reaches the bearing. In addition to the constructional complexity of such a solution, the shielding arrangement used to bring about the deflection makes for inexact metering of the oil, so that the resulting lubrication can be overabundant in certain instances and insufficient in others.

In cases where a pump is utilized, metering of the flow supplied to the bearing is optimized by means of a restriction on the pump outlet line.

The drawback with this type of arrangement is in the risk that the outlet line could become blocked:
a risk obviated in practice by directing a quantity of oil into the outlet line significantly greater than would be needed to lubricate the bearing, and diverting the majority of the flow through a bypass circuit and back to the bowl before it can reach the bearing.

This solution too has its drawbacks, in that the bearings do not receive optimum lubrication and the bypass circuit brings constructional complexities.

EP 0215585 discloses an oil mist lubrication device applicable to the type of arrangement with a shaft set in rotation by a belt drive. In this reference, which substantially furnishes the prior art portion of the main claim appended hereto, the lubrication device comprises a rotor substantially in the form of a cylindrical sleeve which extends down into the bath of lubricating oil and rotates as one with the shaft, thereby causing the oil to be projected out toward the periphery and to atomize internally of the enclosure afforded by the casing.

The rotor occupies a position below the bearings, close to the part of the casing in which the lower bearing is carried, so that the lubricant atomized by the rotor reaches the lower-bearing directly. To reach the upper bearing, which is much farther from the rotor, the oil follows a longer route involving changes of direction, and must also pass through openings created in the webs of the casing by which the lower bearing is supported.

Albeit undoubtedly simple in terms of embodiment, such a solution betrays drawbacks attributable to the notably dissimilar lubrication conditions which register at the lower and upper bearings.

DE 44 08 182 C1 discloses another solution, falling likewise within the scope of machines having a belt driven shaft (though with the belt positioned close to the upper bearing, unlike the solution described above); the rotor in this instance is provided by the lower bearing, which runs immersed in the oil bath afforded by the bowl. The oil is thus atomized by the rotation of the bearing.

This device may further comprise a rotating element positioned above the lower bearing and fashioned in such a way as to invest the lubricant mist with a pumping action that can in some measure improve the less favourable conditions under which the upper bearing is lubricated.

In practice, the device described in this latter reference makes use substantially of two rotors:
the first being the lower bearing, which rotates at least partially immersed and serves to atomize the oil, and the second, an additional rotating element positioned above the bearing and serving solely to accelerate the oil mist.

Because of the fact that the lower bearing rotates immersed in the oil bath, this solution likewise betrays all of the overheating related drawbacks referred to already in connection with splash type lubrication.

Furthermore, in aspirating the oil mist directed upward from the lower bearing, the rotating element receives a fluid rich in oil droplets dispersed as a result of the splash generated by the rotation of the rolling components within the bearing. The flow taken up by the rotating element therefore consists of a mist containing liquid droplets which occasion a dissipation of energy by reason of their impact on the rotating element, as well as potential rapid wear on the element.

Again in this instance one has the drawback that the two bearings are lubricated under manifestly different conditions. What is more, the lubrication of the upper bearing takes place in conditions not only more critical than those which register at the lower bearing, but also strictly dependent on the amount of splash generated by the lower bearing and perhaps even on the level of oil in the bowl, which determines a deeper or shallower immersion of the selfsame lower bearing.

Accordingly, the object of the present invention is to overcome the aforementioned drawbacks in an oil mist lubrication system for vertically disposed rotating shafts, through the adoption of a device by which the two relative bearings are lubricated independently of one another.

The stated object is duly realized according to the present invention in a device of which the rotor occupies a position between the bearings, above the free surface of the oil bath, and exhibits three oil inlet ports and two mist feed ports selectively interconnecting a top face and a bottom face of the rotor. The device further comprises a fixed element of which the part uppermost is associated with the bottom face of the rotor and the lower part extends down into the oil bath. The fixed element affords a duct positioned alongside the lower bearing, which serves to connect the oil bath with the inlet ports of the rotor, and interacts with the rotor in such a way that oil is lifted from the bath into the duct, directed through the inlet ports to the side of the rotor uppermost and flung from the relative top face into the enclosure afforded by the casing.

The oil atomizes, whereupon the resulting mist is gathered back into the rotor, directed down through the feed ports to lubricate the lower bearing, and then returned to the enclosure of the casing.

The invention will now be described in detail, by way of example, with the aid of the accompanying drawings, in which:
- fig 1 illustrates a centrifugal separator, seen in a partial and sectional view, which is equipped with a device according to the invention;
- fig 2 illustrates a detail of the device, seen enlarged and in plan from above;
- figs 3, 4 and 5 illustrate the detail of fig 2 in sections taken respectively through III-III, IV-IV and V-V;
- fig 6 illustrates the detail of fig 2 in a side elevation.

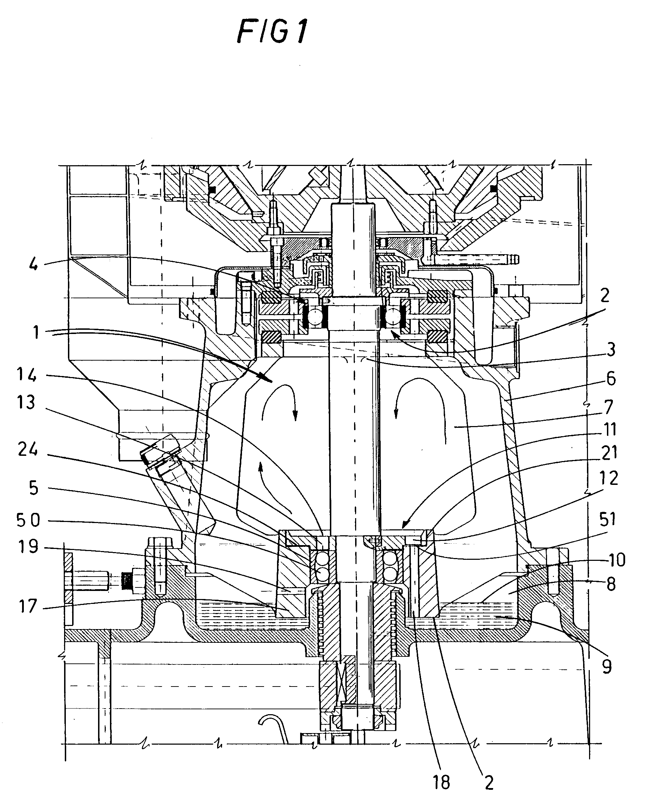

With reference to the drawings, and in particular to fig 1, the invention disclosed will be seen as consisting essentially in a device 1 for the oil mist lubrication of bearing assemblies 2 carrying a vertically disposed rotating shaft 3, of which the bearings 4 and 5 are positioned one above the other and separated by a given distance.

Intended preferably although not exclusively for centrifugal separators, such a device 1 comprises:
- a casing 6, positioned around the shaft 3 and supporting at least one of the two bearings 4 and 5 internally of the relative enclosure 7;
- an open topped bowl 8, containing a bath 9 of lubricating oil of which the free surface 10 lies below the bearings 4 and 5;
- a rotor 11 occupying the enclosure 7 and set in rotation by the shaft 3.

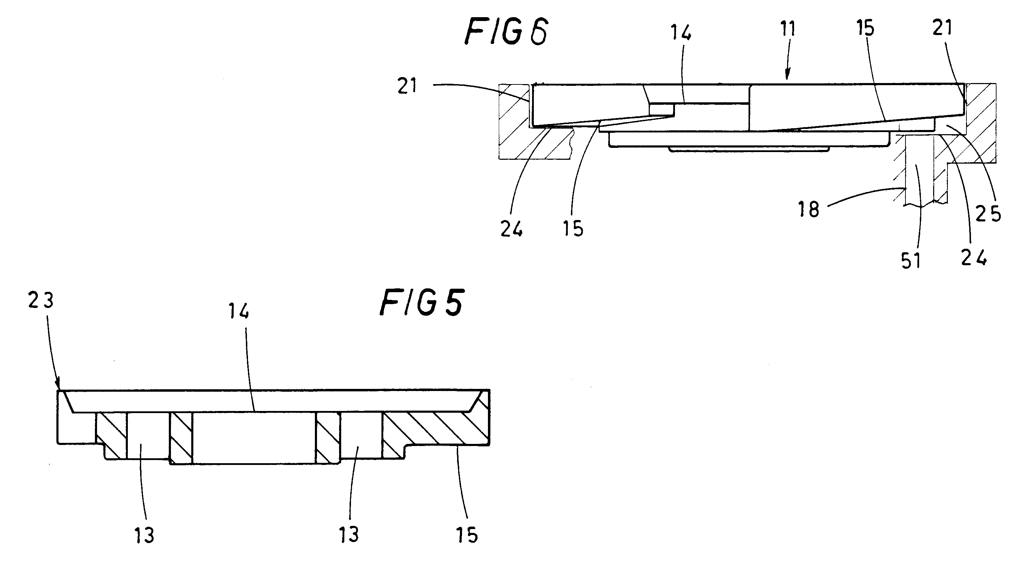

The rotor 11 is disposed between the two bearings 4 and 5, above the free surface 10 of the lubricating oil bath 9, and appears as a disc pierced through by three oil inlet ports 12 located on a common circumference denoted 20, also by two mist feed ports 13. Both the oil inlet ports 12 and the mist feed ports 13 extend between a flat top face 14 of the rotor 11 and a bottom face 15 of the rotor that exhibits a profile essentially of helical geometry, as indicated in fig 6.

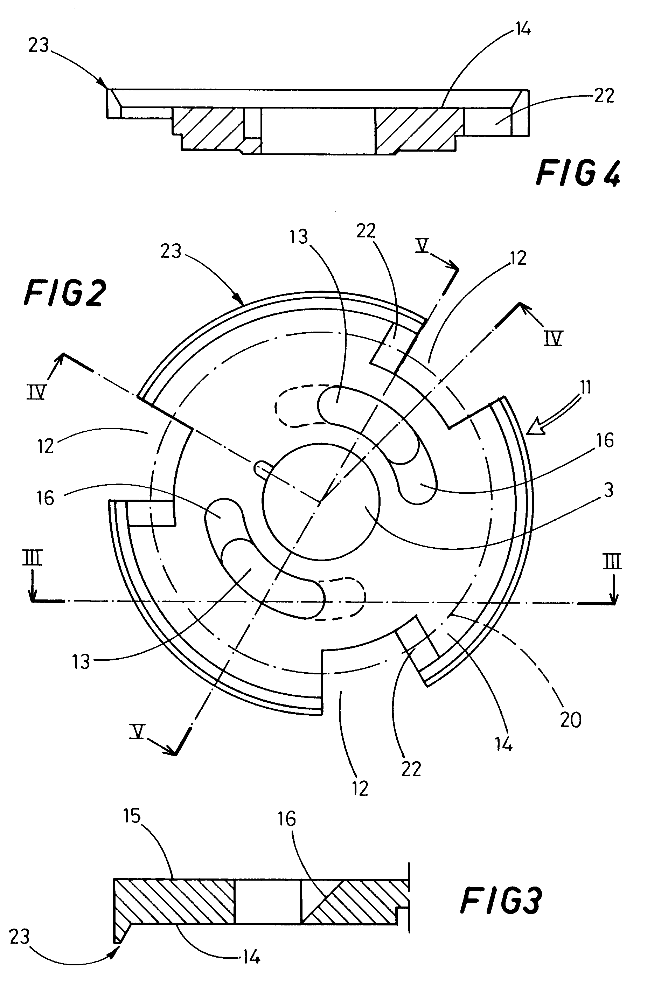

As discernible in fig 2, the oil inlet ports 12 are spaced apart at identical distance one from another around the common circumference 20. The mist feed ports 13 are likewise mutually equispaced though in this instance occupying positions on the rotor 11 at a distance from the centre different to that of the oil inlet ports 12, which brings them nearer to the shaft 3 than the latter.

Looking at fig 2 in conjunction with figs 3, 4 and 5, it will be observed that the mist feed ports 13 present a passage appearing preferably as a curved slot such as will compass the rolling elements 50 of the bearing 5 beneath through an arc of generous proportions, also that the oil inlet ports 12 and the mist feed ports 13 exhibit respective inclined surfaces 22 and 16 connecting with the top face 14 of the rotor 11 and disposed in mutual opposition at the ends of the relative openings.

The rotor 11 also affords a peripheral rim 23 which is raised from the top face 14 in such a way as to project toward the upper bearing 4.

As indicated to advantage in fig 3, the peripheral rim 23 tapers from the top face 14 of the rotor 11 in such a way as to maximize the efficiency of the atomizing action on the oil, as will become evident in due course.

The device 1 disclosed further comprises a fixed element 17 encircling the lower bearing 5 of the shaft 3, of which the part uppermost is associated with the bottom face 15 of the rotor 11 and the lower part extends toward the oil bath 9 beneath.

As illustrated in fig 1, the fixed element 17 in question affords a first duct 18 located alongside the lower bearing 5 and serving to connect the oil inlet ports 12 of the rotor 11 with the oil bath 9, and a second duct 19 by which the lower bearing 5 is connected with the enclosure 7 of the casing 6.

The association between the fixed element 17 and the rotor 11 consists in a breasted fit between a flat face 24 of the former and the bottom face 15 of the latter. As a result of the aforementioned helical profile exhibited by the bottom face 15 of the rotor 11, the rotor and the fixed element 17 combine to create a channel 25 (fig 6) of variable section into which the topmost end 51 of the first duct 18 emerges, thus connecting the channel 25 with the oil bath 9 beneath.

Accordingly, the rotation of the rotor 11 induces suction, causing the oil to rise from the bath 9 up through the first duct 18 and ultimately to reach the revolving inlet ports 12 of the rotor.

In the example of the drawings, which represents a preferred embodiment of the association between the fixed element 17 and the rotor 11, the rotor is encompassed laterally by a peripheral wall 21 of the fixed element 17, which consequently is also instrumental in delimiting the oil inlet ports 12.

As regards the operation of the device 1 according to the invention, it will be seen that the fixed element 17 and the rotor 11 interact in such a way that oil is aspirated from the bath 9 and directed through the inlet ports 12 onto the top face 14 of the rotor 11. The emerging fluid is flung from the top face 14 of the rotor 11 and projected beyond the peripheral rim 23 into the enclosure 7 afforded by the casing 6, becoming atomized in the process.

The effect is to create a mist which in addition to bathing the upper bearing 4 will also be drawn back into the rotor 11, directed down through the feed ports 13 onto the lower bearing 5 of the shaft 3, and returned thereafter as fluid to the enclosure 7 of the casing 6 via the second duct 19 of the fixed element 17.

It will be evident that the object stated at the outset is fully realized by the device 1 disclosed, and with the added advantage that the functions of raising oil from the bath and mist lubricating both bearings 4 and 5 are performed utilizing a single rotor 11.

Similarly evident is the fact that the flows of oil mist directed at the upper bearing 4 and the lower bearing 5 remain independent of one another, thus optimizing the conditions under which both bearings are lubricated.

## Claims

1. A device for the oil mist lubrication of bearing assemblies (2) carrying a vertically disposed rotating shaft (3), of which the bearings (4, 5) are positioned one above the other and separated by a given distance, comprising:
- a casing (6), positioned around the shaft (3) and supporting at least one bearing (4) internally of the relative enclosure (7);
- an open topped bowl (8), containing a bath (9) of lubricating oil of which the free surface (10) lies below the bearings (4, 5);
- a rotor (11) occupying the enclosure (7) and set in rotation by the shaft (3),
characterized
- in that the rotor (11) is positioned between the bearings (4, 5), above the free surface (10) of the lubricating oil bath (9), and pierced through by at least one oil inlet port (12) and at least one mist feed port (13) extending between a top face (14) and a bottom face (15) of the rotor (11);
- in that it further comprises a fixed element (17) associated uppermost with the bottom face (15) of the rotor (11), extending at bottom down toward the oil bath (9), and affording a first duct (18) that lies alongside the lower bearing (5) and serves to connect the oil inlet port (12) of the rotor (11) with the oil bath (9); and,
- in that the interaction of the fixed element (17) and the rotor (11) causes lubricant to be raised by suction from the oil bath (9), directed through the inlet port (12) onto the top of the rotor (11), and projected from the top face (14) of the rotor into the enclosure (7) of the casing (6) in such a way as to atomize, whereupon the resulting oil mist is drawn back into the rotor (11), directed downward through the mist feed ports (13) to lubricate the lower bearing (5) of the shaft (3), and thereafter returned to the enclosure (7).

2. A device as in claim 1, wherein the lower bearing (5) of the shaft (3) is encircled by the fixed element (17).

3. A device as in claim 1, wherein the fixed element (17) affords a second duct (19) by which the lower bearing (5) is connected with the enclosure (7) of the casing (6).

4. A device as in claim 1, wherein the oil inlet port (12) and the mist feed port (13) are positioned on the rotor (11) at dissimilar distances from the rotating shaft (3).

5. A device as in claim 1, wherein the rotor (11) is furnished with three oil inlet ports (12) located on a common circumference (20).

6. A device as in claim 5, wherein the three oil inlet ports (12) are spaced apart at identical distance around the common circumference (20).

7. A device as in claim 1, wherein the rotor (11) is furnished with two mist feed ports (13) positioned nearer to the rotating shaft (3) than the at least one oil inlet port (12).

8. A device as in claim 1 or 7, wherein the mist feed port (13) exhibits an outline in the shape of a curved slot.

9. A device as in claim 7, wherein the two mist feed ports (13) are diametrically opposed.

10. A device as in claim 1, wherein the mist feed port (13) exhibits an inclined surface (16) connecting with the top face (14) of the rotor (11).

11. A device as in claim 1, wherein the oil inlet port (12) exhibits an inclined surface (22) connecting with the top face (14) of the rotor (11).

12. A device as in claim 1, wherein the oil inlet port (12) and the mist feed port (13) exhibit respective oppositely inclined surfaces (22, 16) connecting with the top face (14) of the rotor (11).

13. A device as in claim 1, wherein the rotor (11) exhibits a peripheral rim (23) elevated from the top face (14) in such a way as to project toward a substantially adjacent bearing (4).

14. A device as in claim 13, wherein the projecting peripheral rim (23) tapers from the top face (14) of the rotor (11).

15. A device as in claim 1, wherein the bottom face (15) of the rotor (11) exhibits a helical profile that is offered to an opposing flat face (24) of the fixed element (17) and combines therewith to create a channel (25) of variable section such as will generate suction and thus draw the oil along the first duct (18) of the fixed element (17).

16. A device as in claim 1, wherein the fixed element (17) exhibits a peripheral wall (21) positioned to encircle the rotor (11) and combining therewith to delimit the oil inlet port (12) when the fixed element and the rotor are associated.
